# EUROPEAN PATENT APPLICATION

(11) **EP 4 742 064 A1**
(43) Date of publication of application: **13.05.2026**
(21) Application number: 25190932.1
(22) Date of filing: 22.07.2025
(51) Int. Cl.: G06F 21/10, G06F 9/54, G06F 21/62

(54) **IMAGE FORMING APPARATUS**

(30) Priority: 11.11.2024 JP 2024196808
(71) Applicant: ETRIA Co., Ltd., Yokohama Kanagawa (JP)
(72) Inventor: KATO, Hiroyuki, Yokohama (JP)
(74) Representative: J A Kemp LLP

(57) **Abstract**

An image forming apparatus according to an embodiment includes a storage device and a processor. The storage device stores a linkage source app that executes one of various functions, a linkage target app that links with the linkage source app, and linkage target app management information including information of permission/non-permission of linkage of the linkage target app with the linkage source app. The processor executes the linkage source app and the linkage target app. The processor creates a candidate list of candidates of linkage target apps that are linkable with the linkage source app, based on the linkage target app management information, provides an environment for selecting the linkage target app from the candidate list, starts the linkage target app selected from the candidate list, and delivers processing target data from the linkage source app to the linkage target app at a time of starting the linkage target app.

## Description

### FIELD

Embodiments described herein relate to an image forming apparatus disposed in a workplace.

### BACKGROUND

Conventionally, there is known an image forming apparatus having various functions. The image forming apparatus includes various applications (apps) for executing the various functions. There is a case where two apps, for example, are linked to cooperate with each other, and processing target data is delivered from a linkage source app to a linkage target app. At this time, there is a case where data that cannot be processed in the linkage target app is delivered. In this case, the linkage target app cannot process the processing target data at a stage of processing the processing target data, and an error occurs. Thus, a user has to perform work once again from the stage of starting the linkage source app, and the work that has already been done becomes useless. To cope with this, there is known a technology for starting an appropriate linkage target app.

### BRIEF DESCRIPTION OF THE DRAWINGS

FIG. 1 is a diagram illustrating a configuration example of an image forming apparatus according to an embodiment.
FIG. 2 is a diagram illustrating an example of a file linkage protocol definition.
FIG. 3 is a diagram illustrating an example of a linkage target app management table that stores analysis information of the file linkage protocol definition.
FIG. 4 is a diagram illustrating an example of an app linkage sequence.
FIG. 5 is a diagram illustrating an example of a linkable app selection screen.
FIG. 6 is a flowchart illustrating an example of an installation process of a linkage target app in the image forming apparatus according to the embodiment.
FIG. 7 is a flowchart illustrating an example of a first app linkage process in the image forming apparatus according to the embodiment.
FIG. 8 is a flowchart illustrating an example of a first linkage target app candidate list creation process in the first file linkage process.
FIG. 9 is a flowchart illustrating an example of a second linkage target app candidate list creation process in the first file linkage process.
FIG. 10 is a diagram illustrating an example of a function setting table.
FIG. 11 is a flowchart illustrating an example of a third linkage target app candidate list creation process in the first file linkage process.
FIG. 12 is a flowchart illustrating an example of a second app linkage process in the image forming apparatus according to the embodiment.
FIG. 13 is a flowchart illustrating an example of a linkage target app candidate list creation process in the second file linkage process.

### DETAILED DESCRIPTION

An image forming apparatus according to an embodiment includes a storage device and a processor. The storage device stores a linkage source app that executes one of various functions, a linkage target app that links with the linkage source app, and linkage target app management information including information of permission/non-permission of linkage of the linkage target app with the linkage source app. The processor executes the linkage source app and the linkage target app. The processor creates a candidate list of candidates of linkage target apps that are linkable with the linkage source app, based on the linkage target app management information, provides an environment for selecting the linkage target app from the candidate list, starts the linkage target app selected from the candidate list, and delivers processing target data from the linkage source app to the linkage target app at a time of starting the linkage target app.

Hereinafter, embodiments are described with reference to the accompanying drawings.

### (Image Forming Apparatus)

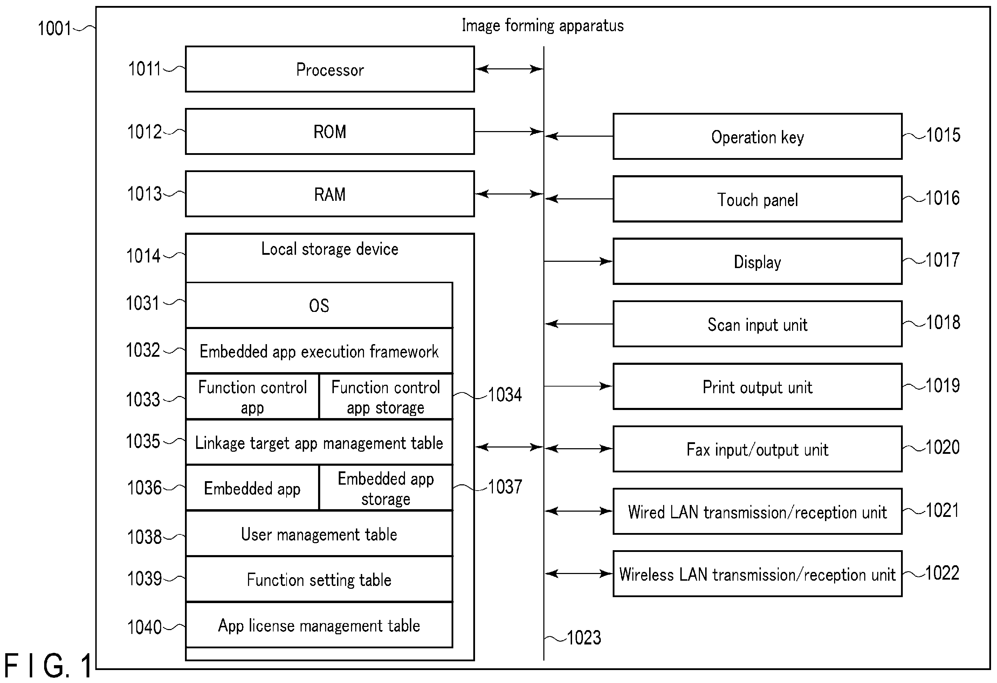

To begin with, referring to FIG. 1, an image forming apparatus 1001 according to an embodiment is described. FIG. 1 is a diagram schematically illustrating a configuration example of the image forming apparatus 1001 according to the embodiment.

The image forming apparatus 1001 is, for example, a multifunction peripheral (MFP). The image forming apparatus 1001 has a print function, a scan function, a copy function, a fax function, and the like. The print function is a function of printing an image on a paper sheet. The scan function is a function of scanning an image from a document or the like. The copy function is a function of printing an image, which is read from a document or the like by using the scan function, on a paper sheet by using the print function. The fax function is a function of transmitting, for example, an image, which is read from a document or the like by using the scan function, to the outside, or printing an image, which is received from the outside, on a paper sheet by using the print function.

The image forming apparatus 1001 includes a processor 1011, a read-only memory (ROM) 1012, a random access memory (RAM) 1013, a local storage device 1014, an operation key 1015, a touch panel 1016, a display 1017, a scan input unit 1018, a print output unit 1019, a fax input/output unit 1020, a wired LAN transmission/reception unit 1021, a wireless LAN transmission/reception unit 1022, and a system bus 1023.

The processor 1011 is an arithmetic element that executes an arithmetic process. The processor 1011 controls the image forming apparatus 1001 in accordance with a software program stored in the ROM 1012 or the local storage device 1014. The processor 1011 includes, for example, a central processing unit (CPU), a graphical processing unit (GPU), or the like.

The ROM 1012 is a nonvolatile memory that constitutes a part of a main memory. The ROM 1012 non-transitorily stores a start program that is necessary for starting the image forming apparatus 1001. The ROM 1012 is composed of, for example, an erasable programmable read-only memory (EPROM), and stores various setting data at a start time, in addition to the start program.

The RAM 1013 is a volatile memory that constitutes a part of the main memory. The RAM 1013 temporarily stores a program that is necessary for the processing of the processor 1011, and data that is necessary for the execution of the program. The RAM 1013 functions as a working memory of the processor 1011.

The local storage device 1014 is a nonvolatile memory such as a hard disk drive (HDD) or a solid state drive (SSD). The local storage device 1014 non-transitorily stores a program that the processor 1011 executes, and data that is necessary for the execution of the program. Hereinafter, the program and the data necessary for the execution of the program are comprehensively referred to simply as "program". In other words, the program includes the data necessary for the execution of the program. The program stored in the local storage device 1014 will be described later.

The operation key 1015 is an input device that accepts an instruction from the user. For example, the operation key 1015 includes a plurality of push keys allocated to various functions, and accepts an instruction from the user via an operation of a push key.

The touch panel 1016 is an input device that accepts an instruction from the user, and accepts an instruction from the user via a touch operation by a finger or a touch pen.

The display 1017 is an output device that presents information to the user and is, to be more specific, a display device that presents information to the user by display. For example, the display 1017 is composed of a liquid crystal display, an organic EL display, or the like.

For example, the touch panel 1016 is laid over the display 1017, and the display function of the display 1017 and the input function of the touch panel 1016 are combined in use. The touch panel 1016 and the display 1017 constitute an input/output device.

The scan input unit 1018 is a device that executes the scan function, and scans an image from a document. The scan input unit 1018 includes, for example, a document glass and a scan module. The scan module scans an image from a document placed on the document glass, or from a document that is fed to the document glass by a document feed device. The scan module radiates illumination light on a document that is a scan target, receives reflective light by an image sensor, and converts the received light into a digital signal. Thereby, the scan module scans an image from the document.

The print output unit 1019 is a device that executes the print function, and prints an image on a paper sheet, which is conveyed by a sheet convey device, based on image data that is supplied. The image data provided for printing is, for example, image data that is scanned from the document by the scan input unit 1018. Alternatively, the image data is, for example, image data that is transmitted from an external device other than the image forming apparatus 1001, and is received by the fax input/output unit 1020.

For example, the print output unit 1019 prints an image on a paper sheet by forming a toner image on a transfer belt and transferring the toner image onto the paper sheet. Alternatively, the print output unit 1019 may print an image on a paper sheet by jetting ink on the paper sheet by an ink jet head. Aside from these methods, the print output unit 1019 may print an image on a paper sheet by other methods.

The fax input/output unit 1020 is a device that executes the fax function. For example, the fax input/output unit 1020 transmits image data scanned by the scan input unit 1018 to an external device or a cloud via the wired LAN transmission/reception unit 1021 or wireless LAN transmission/reception unit 1022, and receives image data, which is to be printed by the print output unit 1019, from an external device or a cloud.

The wired LAN transmission/reception unit 1021 executes communication with an external device or a cloud via a local area network (LAN) that is constituted by wire. For example, the wired LAN transmission/reception unit 1021 transmits image data scanned by the scan input unit 1018 to an external device or a cloud, and receives image data, which is to be printed by the print output unit 1019, from an external device or a cloud.

The wireless LAN transmission/reception unit 1022 executes communication with an external device or a cloud via a LAN that is wirelessly constituted. For example, the wireless LAN transmission/reception unit 1022 transmits image data scanned by the scan input unit 1018 to an external device or a cloud, and receives image data, which is to be printed by the print output unit 1019, from an external device or a cloud.

The system bus 1023 is a communication path between the processor 1011, ROM 1012, RAM 1013, local storage device 1014, operation key 1015, touch panel 1016, display 1017, scan input unit 1018, print output unit 1019, fax input/output unit 1020, wired LAN transmission/reception unit 1021, and wireless LAN transmission/reception unit 1022. The processor 1011, ROM 1012, RAM 1013, local storage device 1014, operation key 1015, touch panel 1016, display 1017, scan input unit 1018, print output unit 1019, fax input/output unit 1020, wired LAN transmission/reception unit 1021, and wireless LAN transmission/reception unit 1022 can transmit and receive information, data, control signals, instructions, responses, and the like via the system bus 1023.

The processor 1011, ROM 1012, RAM 1013, and local storage device 1014 constitute a computer that controls the image forming apparatus 1001.

In the local storage device 1014, an operating system (OS) 1031; an embedded app execution framework 1032; a function control app 1033 and a function control app storage 1034; a linkage target app management table 1035; an embedded app 1036 and an embedded app storage 1037; a user management table 1038; a function setting table 1039; and an app license management table 1040 are installed.

Here, "app" is an abbreviation of an application, and means an application. In addition, an application means a software program that achieves a specific work or purpose.

The operating system 1031 is system software, and provides an operational base of an app, i.e., an application.

The function control app 1033 includes execution files including main programs that execute various functions of the image forming apparatus 1001. The function control app storage 1034 includes metadata of the function control app 1033, including various files, setting information, and the like, which are necessary for the execution of the function control app 1033.

For example, the function control app 1033 includes a scan app, a print app, a fax transmission app, and the like. The scan app controls the scan input unit 1018 to execute the scan function. The print app controls the print output unit 1019 to execute the print function. The fax transmission app controls the fax input/output unit 1020 to execute the fax function.

The embedded app 1036 includes execution files including main programs that execute other functions by being linked with the various functions of the image forming apparatus 1001. The embedded app storage 1037 includes metadata of the embedded app 1036, including various files, setting information, and the like, which are necessary for the execution of the embedded app 1036.

For example, the embedded app 1036 includes a cloud transfer app, an E-mail transmission app, and the like. The cloud transfer app controls the wired LAN transmission/reception unit 1021 or the wireless LAN transmission/reception unit 1022 to execute cloud transfer of processing target data of a linkage source app that links the cloud transfer app. The E-mail app controls the wired LAN transmission/reception unit 1021 or the wireless LAN transmission/reception unit 1022 to execute E-mail transmission of processing target data of a linkage source app that links with the E-mail app.

The linkage target app management table 1035 is a table for managing a linkage target app for a linkage source app, and includes, in a table format, management information of the linkage target app for the linkage source app. The linkage target app management table 1035 includes information relating to permission/non-permission of linkage of the linkage target app with the linkage source app.

Here, the linkage source app is a sub-app of the function control app 1033, and the linkage target app is a sub-app of the embedded app 1036. Aside from this, the linkage target app may be another sub-app of the function control app 1033.

For example, the linkage source app is the scan app, which is a sub-app of the function control apps 1033. In addition, the linkage target apps include the cloud transfer app and E-mail app included in the embedded apps 1036, and the print app and fax transmission app included in the function control apps 1033. Hereinafter, the description is given on the assumption that the linkage source app is the scan app.

The user management table 1038 includes management information of users in a table format. For example, the user management table 1038 includes, in regard to each of users, identification information, and information such as the presence/absence of a right of use of the linkage target app. The identification information includes, for example, a user ID, a password, and the like.

The function setting table 1039 includes, in a table format, setting information of validity/invalidity of app linkage, which is set in regard to each function of the image forming apparatus 1001. In one example, the setting information of validity/invalidity of app linkage in regard to each function is set for each of image forming apparatuses. In another example, the setting information of validity/invalidity of app linkage in regard to each function is set for each of users.

The app license management table 1040 includes license information of linkage target apps in a table format. For example, the license information of linkage target apps includes information relating to the necessity/nonnecessity of the license of a linkage target app, the presence/absence of the license, the expiration date of the license, and the like. In one example, the license information of the linkage target app is set for each of image information apparatuses. In another example, the license information of the linkage target app is set for each of users.

The embedded app execution framework 1032 controls the transmission source app and the transmission destination app (function control app 1033 and embedded app 1036), based on the information of the linkage target app management table 1035, user management table 1038, function setting table 1039 and app license management table 1040.

The programs installed in the local storage device 1014 are provided to the image forming apparatus 1001 via, for example, a non-transitory computer readable storage medium. In addition, the programs may be stored in a server on a network, and may be provided to the image forming apparatus 1001 by being downloaded.

For example, at a time of starting the computer, the processor 1011 executes the start program in the ROM 1012, and starts the OS 1031. Under the control by the OS 1031, the processor 1011 monitors the input of instructions, the connection of external devices, and the like. In addition, under the control by the OS 1031, the processor 1011 sets a program area and a data area in the RAM 1013.

For example, by loading in the RAM 1013 the various function control applications stored in the local storage device 1014 and executing the various function control applications, the processor 1011 controls the devices of the image forming apparatus 1001 and controls the entirety of the image forming apparatus 1001.

In addition, for example, by loading in the RAM 1013 the various embedded apps stored in the local storage device 1014 and executing the various embedded apps, the processor 1011 executes various functions of the image forming apparatus 1001, for instance, the print function, scan function, copy function, fax function, and the like.

### (File Linkage Protocol Definition)

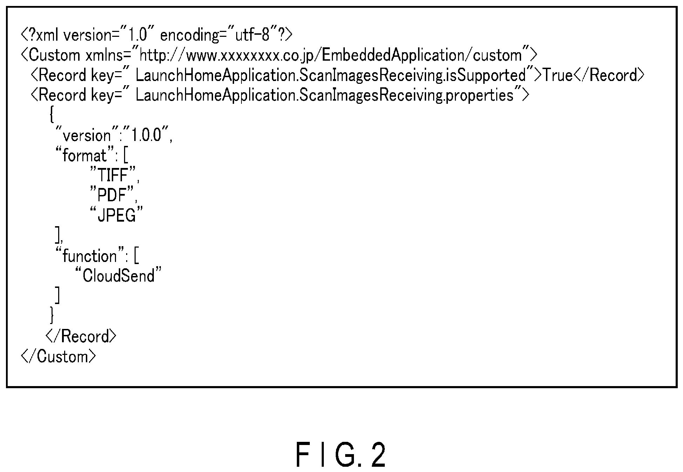

Next, referring to FIG. 2, an example of a file linkage protocol definition is described. FIG. 2 is a diagram illustrating an example of the file linkage protocol definition. The file linkage protocol definition is included in a package file of a linkage target app. The package file of the linkage target app is a file in which all files, resources, codes, and the like that are necessary for installing the linkage target app are put together.

In the example of the file linkage protocol definition illustrated in FIG. 2, it is defined that the linkage target app (EmbeddedApplication) can execute (True) "scan image reception" (ScanImagesReceiving.isSupported). In addition, the file type (format) of scan images that the linkage target app can receive includes TIFF, PDF, and JPEG. Furthermore, it is defined that the embedded app includes cloud transfer (CloudSend) as an app function (function).

### (Linkage Target App Management Table)

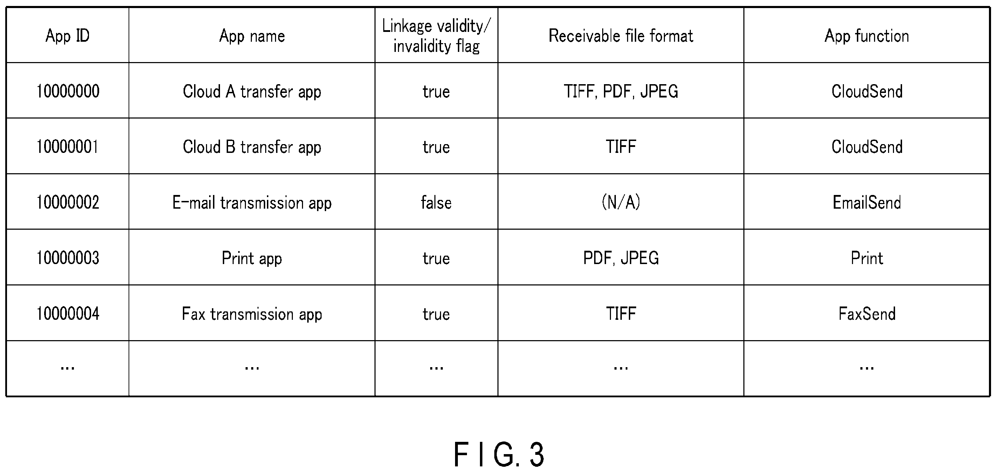

Next, referring to FIG. 3, an example of the linkage target app management table is described. FIG. 3 is a diagram illustrating an example of the linkage target app management table 1035.

The linkage target app management table 1035 is a table for managing linkage target apps, and includes column captions of an app ID, an app name, a linkage validity/invalidity flag, a receivable file format, and an app function.

The app ID represents an identification code of a linkage target app. The app name represents the name of a linkage target app. The linkage validity/invalidity flag represents permission/non-permission of linkage with a scan app. The receivable file format represents a file format of a file of a scan image that is receivable (processible) by a linkage target app. The app function represents a processing function of a linkage target app for a file of a scan image.

In the linkage target app management table 1035, at a time of an installation process of a linkage target app, the file linkage protocol definition included in the package file is analyzed and the analysis information is stored in a table format.

### (App linkage Sequence)

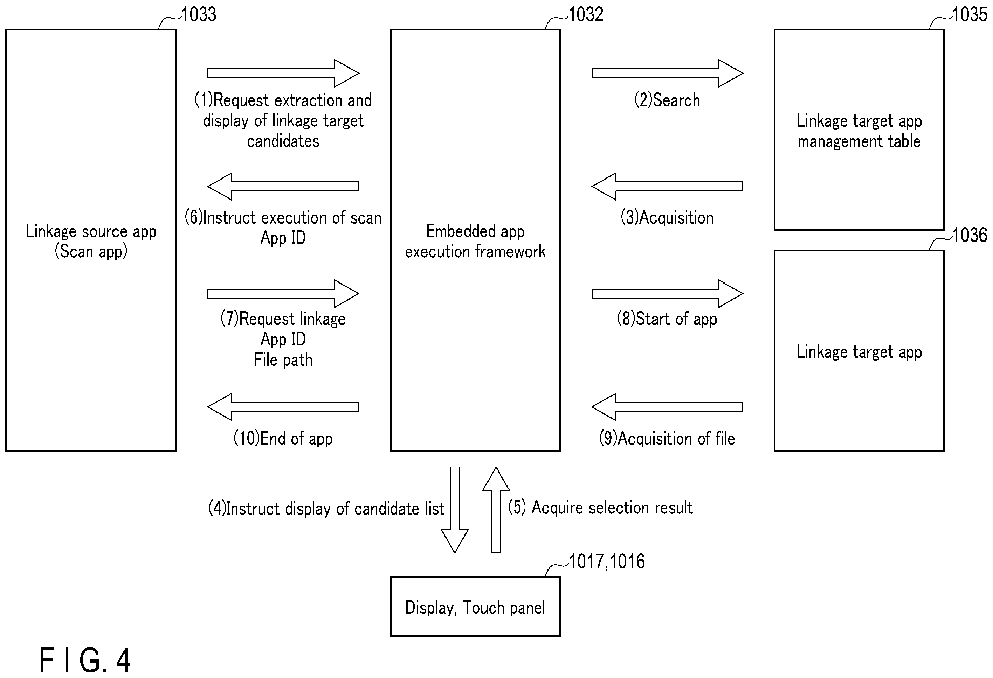

Next, referring to FIG. 4, an example of an app linkage sequence is described. FIG. 4 is a diagram illustrating an example of the app linkage sequence.

The app linkage sequence illustrated in FIG. 4 is started when the scan app that is the linkage source app is started. Specifically, the start of the scan app is instructed by the user, the app linkage is selected on a home screen of the scan app, and the app linkage sequence is started. At the time of selecting the app linkage, the saving format (file format type) of the scan image of the scan app that is the linkage source app is also set.
(1) The linkage source app (scan app) requests the embedded app execution framework 1032 to extract candidates of linkage target apps and to display a candidate list. At this time, the linkage source app (scan app) delivers information of the file format type of the scan image.
(2) Upon receiving the request, the embedded app execution framework 1032 searches the linkage target app management table 1035 for candidates of linkage target apps that are linkable with the linkage source app (scan app).
(3) As a result of the search, the embedded app execution framework 1032 acquires candidates of linkage target apps that are linkable with the linkage source app (scan app).

Specifically, based on the linkage target app management table 1035, the embedded app execution framework 1032 determines whether the linkage with the linkage source app (scan app) is possible or not, and acquires a linkage target app that is linkable as a candidate of linkage target apps.

For example, based on the linkage validity/invalidity flags of the linkage target app management table 1035, the embedded app execution framework 1032 acquires a linkage target app with the linkage validity/invalidity flag being "true", as a candidate of the linkable linkage target apps.

Further, the embedded app execution framework 1032 compares the file format type of the scan image of the scan app with the receivable file format of the linkage target app management table 1035, and acquires, as a candidate of linkable linkage target apps, a linkage target app including the file format type of the scan image as the receivable file format.

For example, the embedded app execution framework 1032 acquires a linkage target app that can receive the scan image of the file format "TIFF", as a candidate of the linkable linkage target apps.

(4) Based on the acquired result of the candidates of linkable linkage target apps, the embedded app execution framework 1032 creates a candidate list of linkable linkage target apps. Hereinafter, the candidate list of linkable linkage target apps is referred to as "linkage target app candidate list". The linkage target app candidate list can also be referred to as "linkable app list".

The embedded app execution framework 1032 instructs the display 1017 to display the created linkage target app candidate list, i.e., the linkable app list. The display 1017 displays the linkage target app candidate list. In addition, the touch panel 1016 waits for the user to select a linkage target app from the linkage target app candidate list. Specifically, the display 1017 and the touch panel 1016 provide an environment for selecting the linkage target app from the linkage target app candidate list.

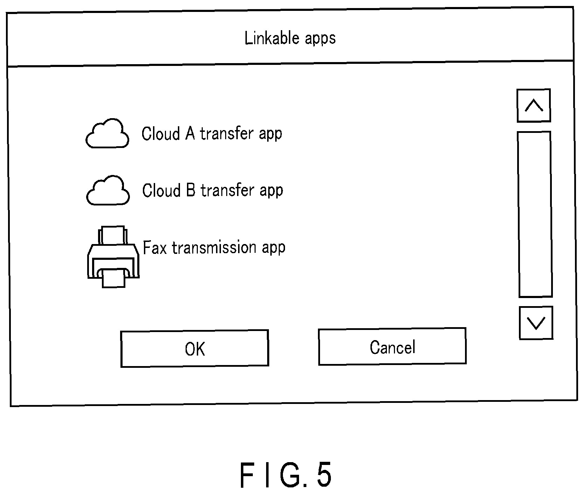

As an example of the environment for selecting the linkage target app from the linkage target app candidate list (linkable app list), FIG. 5 illustrates an example of a linkable app selection screen that is displayed on the display 1017 through the touch panel 1016. In this example, the linkable app selection screen displays a cloud A transfer app, a cloud B transfer app, and a fax transmission app, which are linkable with the scan app (the linkage validity/invalidity flag is "true") and can receive the scan image of the "TIFF" file format (the receivable file format includes "TIFF").

On this linkable app selection screen, the linkage target app in the candidate list can be selected by a touch operation, and the selection can be determined by touching (clicking) an "OK" icon. The selection result can be delivered to the embedded app execution framework 1032.

(5) The embedded app execution framework 1032 acquires the selection result of the linkage target app by the user through the touch panel 1016. For example, the embedded app execution framework 1032 acquires the information (app ID) of the selected linkage target app.

(6) The embedded app execution framework 1032 instructs the linkage source app (scan app) to execute scan. At this time, the embedded app execution framework 1032 delivers to the linkage source app (scan app) the app ID of the linkage target app selected by the user. The app ID of the linkage target app is used for linkage setting in the linkage source app (scan app). Thereafter, the linkage source app (scan app) executes scan, generates a file of a scan image, and saves the generated file of the scan image.

(7) The linkage source app (scan app) issues a request for linkage with the linkage target app to the embedded app execution framework 1032. At this time, the linkage source app (scan app) delivers to the embedded app execution framework 1032 the app ID of the linkage target app and the file path of the destination of saving of the file of the scan image.

(8) Based on the app ID and the file path, the embedded app execution framework 1032 starts the linkage target app, and delivers the file of the scan image, which is the processing target data of the linkage source app (scan app), from the linkage source app (scan app) to the linkage target app.

(9) Upon acquiring the file of the scan image, the linkage target app notifies the embedded app execution framework 1032 of the acquisition of the file.

(10) Upon receiving the notification of the acquisition of the file, the embedded app execution framework 1032 ends the linkage source app (scan app). The linkage target app is utilized in a subsequent process.

### (Installation Process of Linkage target App)

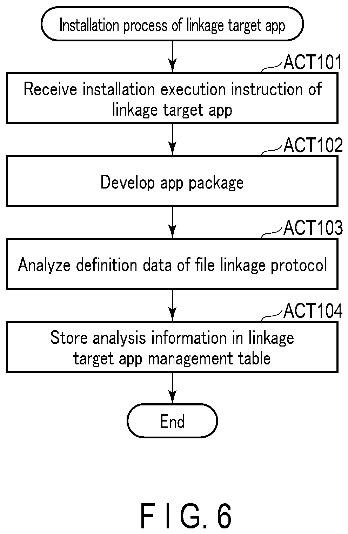

Next, referring to FIG. 6, a description is given of an example of an installation process of a linkage target app in the image forming apparatus 1001 according to the embodiment. FIG. 6 is a flowchart illustrating an example of the installation process of the linkage target app in the image forming apparatus according to the embodiment.

To begin with, in ACT 101, the embedded app execution framework 1032 receives, by an internal app installation control program, the package file of the linkage target app that is the target of installation, and the installation execution instruction for the linkage target app. Here, by way of example, the description is given on the assumption that the linkage target app is an embedded app.

Next, in ACT 102, the embedded app execution framework 1032 develops the package file of the linkage target app that is compression-encrypted. The embedded app execution framework 1032 installs the developed embedded app 1036 and the embedded app storage 1037 into the local storage device 1014.

The package file of the linkage target app includes the file linkage protocol definition data exemplarily illustrated in FIG. 2. In ACT 103, the embedded app execution framework 1032 analyzes the file linkage protocol definition data.

Next, in ACT 104, the embedded app execution framework 1032 stores the analysis information in the linkage target app management table 1035. Thereby, a record of the linkage target app is added to the linkage target app management table 1035 exemplarily illustrated in FIG. 3.

### (First App Linkage Process)

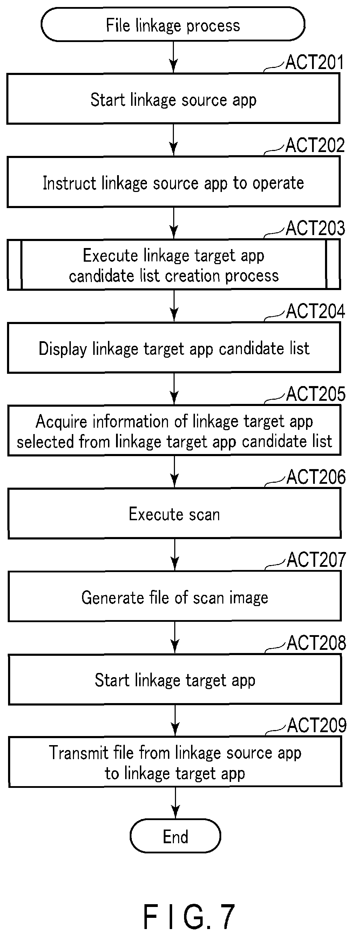

Next, referring to FIG. 7, a description is given of an example of a first app linkage process in the image forming apparatus 1001 according to the embodiment. FIG. 7 is a flowchart illustrating an example of the first app linkage process in the image forming apparatus according to the embodiment.

To begin with, in ACT 201, the embedded app execution framework 1032 starts the linkage source app, upon receiving the start request for the linkage source app by the user's operation of the operation key 1015 or touch panel 1016. Here, by way of example, the description is given on the assumption that the linkage source app is the scan app included in the function control app 1033.

Next, in accordance with the start of the scan app, the embedded app execution framework 1032 causes the display 1017 to display the home screen of the scan app, and waits for the input of an instruction for the operation of the scan app by the user. Here, the description is given on the assumption that the user has input the instruction for app linkage as the operation of the scan app, by the operation key 1015 or touch panel 1016.

Upon receiving the instruction for app linkage, the embedded app execution framework 1032 instructs, in ACT 202, the scan app (linkage source app) to perform the operation of app linkage. Responding to this, the scan app instructs the embedded app execution framework 1032 to execute a linkage target app candidate list creation process. The linkage target app candidate list creation process is a process of creating a linkage target app candidate list corresponding to the file linkage protocol definition of the scan image.

Upon receiving the instruction for the linkage target app candidate list creation process, the embedded app execution framework 1032 executes, in ACT 203, the linkage target app candidate list creation process, based on the linkage target app management table 1035. The linkage target app candidate list creation process will be described later.

Next, the embedded app execution framework 1032 instructs the display 1017 to display the linkage target app candidate list. Responding to this, the display 1017 displays the linkage target app candidate list in ACT 204. In addition, the touch panel 1016 waits for the user to select the linkage target app from the linkage target app candidate list displayed on the display 1017.

If the selection of the linkage target app by the user is performed, the embedded app execution framework 1032 acquires, in ACT 205, the information (app ID) of the linkage target app selected via the touch panel 1016.

Next, the embedded app execution framework 1032 instructs the scan app to execute scan. At this time, the embedded app execution framework 1032 delivers the app ID of the selected linkage target app to the scan app. The app ID is utilized for linkage setting in the scan app. Upon receiving the instruction for the execution of scan, the scan app executes scan in ACT 206.

In ACT 207, the scan app generates a file of the scan image by executing the scan. The scan app saves the generated file of the scan image. Subsequently, the scan app issues a request for linkage with the linkage target app to the embedded app execution framework 1032. At this time, the scan app delivers to the embedded app execution framework 1032 the app ID of the linkage target app and the file path of the destination of saving of the file of the scan image.

Upon receiving the request for linkage with the linkage target app, the embedded app execution framework 1032 starts, in ACT 208, the linkage target app selected via the touch panel 1016, based on the app ID.

In addition, at the time of starting the linkage target app, the embedded app execution framework 1032 transmits, in ACT 209, the file of the scan image, which is the processing target data of the scan app, from the scan app to the linkage target app, based on the file path.

### (First Linkage target App Candidate List Creation Process)

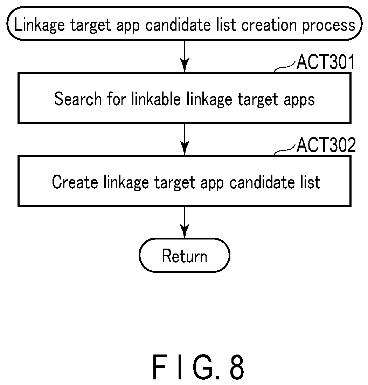

Next, referring to FIG. 8, a description is given of an example of a first linkage target app candidate list creation process in the first app linkage process. FIG. 8 is a flowchart illustrating an example of the first linkage target app candidate list creation process in the first file linkage process.

In ACT 301, the embedded app execution framework 1032 searches the linkage target app management table 1035 for linkage target apps that are linkable with the scan app.

Based on the linkage target app management table 1035, the embedded app execution framework 1032 determines the permission/non-permission of linkage with the scan app in regard to each of the linkage target apps, and acquires a linkable linkage target app as a candidate of linkage target apps.

For example, based on the linkage validity/invalidity flag of the linkage target app management table 1035, the embedded app execution framework 1032 acquires a linkage target app whose linkage validity/invalidity flag is "true", as a candidate of linkable linkage target apps.

Further, the embedded app execution framework 1032 compares the file format type of the scan image of the scan app with the receivable file format of the linkage target app management table 1035, and acquires, as a candidate of linkable target apps, a linkage target app that includes the file format type of the scan image as the receivable file format.

For example, the embedded app execution framework 1032 acquires a linkage target app that can receive the scan image of the file format "TIFF", as a candidate of the linkable linkage target apps.

In ACT 302, the embedded app execution framework 1032 creates the linkage target app candidate list, based on the acquired result of the candidates of linkage target apps acquired in ACT 301.

For example, each time the candidates of linkage target apps are acquired in ACT 301, the embedded app execution framework 1032 adds the acquired candidates of linkage target apps to the linkage target app candidate list. All candidates of linkage target apps acquired in ACT 301 are added to the linkage target app candidate list, so that the creation of the linkage target app candidate list is completed.

Here, the example has been described in which the candidate of the linkage target app is added to the linkage target app candidate list, each time the candidate of the linkage target app is acquired in ACT 301. Instead, all candidates of linkage target apps acquired in ACT 301 may be stored, and the linkage target app candidate list may be created batchwise.

### (Second Linkage Target App Candidate List Creation Process)

There is a mode in which a license is needed for using a linkage target app. A second linkage target app candidate list creation process is a process of creating a linkage target app candidate list (linkable app list) by taking into account the information of a license of a linkage target app that the image forming apparatus 1001 includes, in the first linkage target app candidate list creation process.

The license information of the linkage target app is stored in the app license management table 1040. For example, the license information of the linkage target app includes information relating the necessity/nonnecessity of the license of the linkage target app, the presence/absence of the license, the expiration date of the license, and the like. Here, the license information of the linkage target app is set for each of image forming apparatuses.

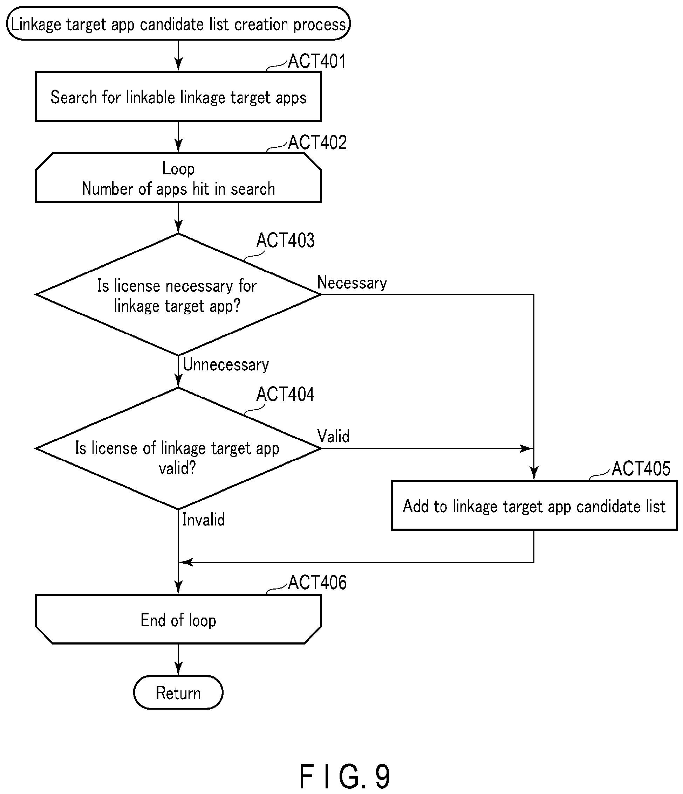

Hereinafter, referring to FIG. 9, a description is given of an example of the second linkage target app candidate list creation process in the first app linkage process. FIG. 9 is a flowchart illustrating an example of the second linkage target app candidate list creation process in the first file linkage process.

In ACT 401, the embedded app execution framework 1032 searches the linkage target app management table 1035 for linkage target apps that are linkable with the scan app. The method of the search is similar to the method of the search in ACT 301 of the first linkage target app candidate list creation process.

Specifically, based on the linkage target app management table 1035, the embedded app execution framework 1032 determines the permission/non-permission of linkage with the scan app in regard to each of the linkage target apps, and acquires a linkable linkage target app as a candidate of linkage target apps.

For example, based on the linkage validity/invalidity flag of the linkage target app management table 1035, the embedded app execution framework 1032 acquires a linkage target apps whose linkage validity/invalidity flag is "true", as a candidate of linkable linkage target apps.

Further, the embedded app execution framework 1032 compares the file format type of the scan image of the scan app with the receivable file format of the linkage target app management table 1035, and acquires, as a candidates of linkable target apps, a linkage target app that includes the file format type of the scan image as the receivable file format.

For example, the embedded app execution framework 1032 acquires a linkage target app that can receive the scan image of the file format "TIFF", as a candidate of the linkable linkage target apps.

In ACT 402 to ACT 406, the embedded app execution framework 1032 creates the linkage target app candidate list, based on the acquired result of candidates of linkage target apps acquired in ACT 401.

For example, in ACT 402 to ACT 406, the embedded app execution framework 1032 executes the following process on each of the linkage target apps (candidates of linkable linkage target apps) that have been hit in the search in ACT 401.

In ACT 403, referring to the app license management table 1040, the embedded app execution framework 1032 determines whether the linkage target app requires the license for the use thereof. If the license is necessary for the linkage target app (ACT 403: necessary), the process advances to ACT 404. If the license is unnecessary for the linkage target app (ACT 403: unnecessary), the process advances to ACT 405.

If the license is necessary for the linkage target app (ACT 403: necessary), the embedded app execution framework 1032, in ACT 404, refers to the app license management table 1040, and determines whether the license of the linkage target app that the image forming apparatus 1001 includes is valid. The determination as to whether the license is valid is performed, for example, based on the presence/absence of the license, and the expiration date of the license. If the license of the linkage target app is valid (ACT 404: valid), the process advances to ACT 405. If the license of the linkage target app is invalid (ACT 404: invalid), the process advances to ACT 406.

If the license is unnecessary for the linkage target app in ACT 403 (ACT 403: unnecessary), or if the license of the linkage target app is valid in ACT 404 (ACT 404: valid), the embedded app execution framework 1032 adds, in ACT 405, the linkage target apps (i.e., the candidates of the linkable linkage target apps) that have been hit in the search in ACT 401 to the linkage target app candidate list.

In ACT 402 to ACT 406, all linkage target apps (i.e., candidates of linkable linkage target apps) that have been hit in the search in ACT 401 are added to the linkage target app candidate list, so that the creation of the linkage target app candidate list is completed.

According to this second linkage target app candidate list creation process, the subsequent processes of the start of the linkage target app and the transmission of the processing target data (scan image) from the linkage source app (scan app) to the linkage target app become processes in which the license of the linkage target app that the image forming apparatus 1001 includes is reflected.

### (Third Linkage Target App Candidate List Creation Process)

There is a mode in which the image forming apparatus 1001 is used by setting the validity/invalidity of app linkage for each of the functions of the image forming apparatus 1001. A third linkage target app candidate list creation process is a process of creating a linkage target app candidate list (linkable app list) by taking into account the setting information of validity/invalidity of app linkage for each of functions, in the first linkage target app candidate list creation process.

The setting information of validity/invalidity of app linkage for each of functions is stored in the function setting table 1039. The function setting table 1039 includes, in a table format, the setting information of validity/invalidity of app linkage for each of functions.

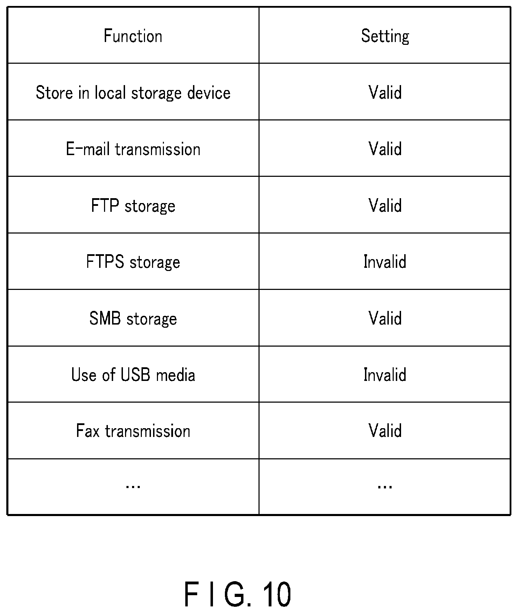

FIG. 10 illustrates an example of the function setting table 1039. In this example, the image forming apparatus 1001 includes functions of storage to a local storage device, E-mail transmission, FTP storage, FTPS storage, use of USB media, fax transmission,...., and the function setting table 1039 includes the setting information of validity/invalidity of app linkage for each of these functions.

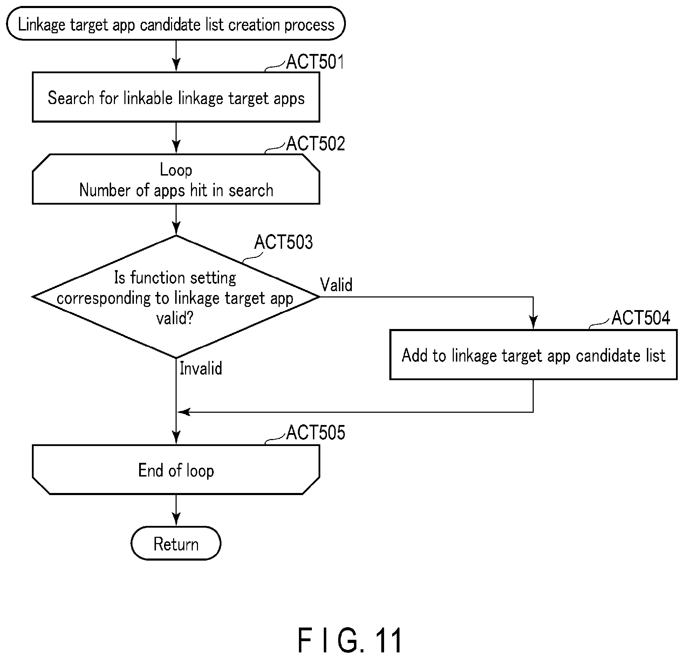

Hereinafter, referring to FIG. 11, a description is given of an example of the third linkage target app candidate list creation process in the first app linkage process. FIG. 11 is a flowchart illustrating an example of the third linkage target app candidate list creation process in the first file linkage process.

In ACT 501, the embedded app execution framework 1032 searches the linkage target app management table 1035 for linkage target apps that are linkable with the scan app. The method of the search is similar to the method of the search in ACT 301 of the first linkage target app candidate list creation process.

Specifically, based on the linkage target app management table 1035, the embedded app execution framework 1032 determines the permission/non-permission of linkage with the scan app in regard to each of the linkage target apps, and acquires a linkable linkage target app as a candidate of linkage target apps. Examples of the determination as to the permission/non-permission of linkage and the acquisition of candidates of linkage target apps are as described above.

In ACT 502 to ACT 505, the embedded app execution framework 1032 creates the linkage target app candidate list, based on the acquired result of candidates of linkage target apps acquired in ACT 501.

For example, in ACT 502 to ACT 505, the embedded app execution framework 1032 executes the following process on each of the linkage target apps (candidates of linkable linkage target apps) that have been hit in the search in ACT 501.

In ACT 503, referring to the function setting table 1039, the embedded app execution framework 1032 determines whether the function setting corresponding to the linkage target app is valid. If the function setting corresponding to the linkage target app is valid (ACT 503: valid), the process advances to ACT 504. If the function setting corresponding to the linkage target app is invalid (ACT 503: invalid), the process advances to ACT 505.

If the function setting corresponding to the linkage target app is valid (ACT 503: valid), the embedded app execution framework 1032 adds, in ACT 504, the linkage target apps (i.e., the candidates of the linkable linkage target apps) that have been hit in the search in ACT 501 to the linkage target app candidate list.

In ACT 502 to ACT 505, all linkage target apps (i.e., candidates of linkable linkage target apps) that have been hit in the search in ACT 501 are added to the linkage target app candidate list, so that the creation of the linkage target app candidate list is completed.

According to this third linkage target app candidate list creation process, the subsequent processes of the start of the linkage target app and the transmission of the processing target data (scan image) from the linkage source app (scan app) to the linkage target app become processes in which the setting information of the validity/invalidity of app linkage, which is set for each of the functions of the image forming apparatus 1001, is reflected.

### (Second App Linkage Process)

There is a mode in which the image forming apparatus 1001 is used by setting a right of use of the image forming apparatus 1001, a right of use of a linkage target app, and the like, for each of users, in a case where the users share the image forming apparatus 1001. In a second app linkage process, login authentication is performed at a time of starting the use of the image forming apparatus 1001, and, at a time of creating the linkage target app candidate list, the linkage target app candidate list is created by taking into account the right of use of the linkage target app of the user who is in login, in addition to the permission/non-permission of linkage of the linkage target app with the linkage source app.

The identification information necessary for login authentication and the information relating to the right of use of the linkage target app are stored in the user management table 1038. For example, the user management table 1038 includes, in a table format, the information such as a user ID, an identification information such as a password, and the presence/absence of the right of use of the linkage target app.

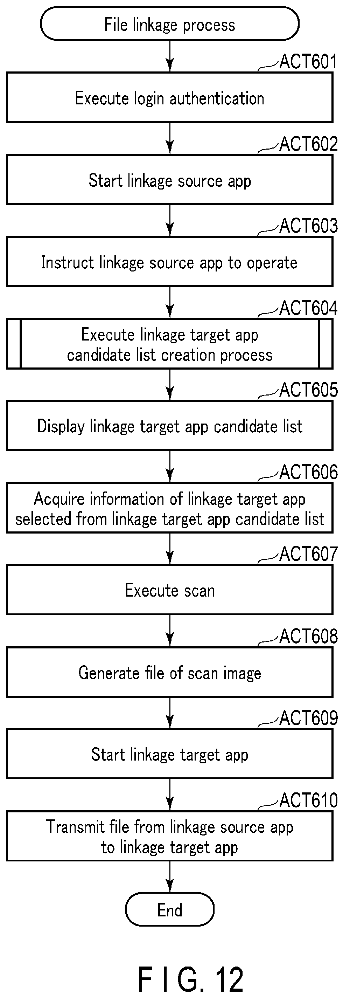

Next, referring to FIG. 12, a description is given of an example of the second app linkage process in the image forming apparatus 1001 according to the embodiment. FIG. 12 is a flowchart illustrating an example of the second app linkage process in the image forming apparatus according to the embodiment.

To begin with, in ACT 601, upon receiving the request for the start of use by the user's operation of the operation key 1015 or touch panel 1016, the image forming apparatus 1001 performs login authentication and confirms that the user who desires the use is a valid user. For example, the login authentication may be performed by a freely chosen method such as the input of a user ID, a password or the like, or the use of an authentication system using an IC card. The embedded app execution framework 1032 acquires, for example, the user ID, through the login authentication.

Next, in ACT 602, the embedded app execution framework 1032 starts the linkage source app, upon receiving the start request for the linkage source app by the user's operation of the operation key 1015 or touch panel 1016. In this case, too, the description is given on the assumption that the linkage source app is the scan app included in the function control app 1033.

In accordance with the start of the scan app, the embedded app execution framework 1032 causes the display 1017 to display the home screen of the scan app, and waits for the input of an instruction for the operation of the scan app by the user. In this case, too, the description is given on the assumption that the user has input the instruction for app linkage as the operation of the scan app, by the operation key 1015 or touch panel 1016.

Upon receiving the instruction for app linkage, the embedded app execution framework 1032 instructs, in ACT 603, the scan app (linkage source app) to perform the operation of app linkage. Responding to this, the scan app instructs the embedded app execution framework 1032 to execute a linkage target app candidate list creation process.

Upon receiving the instruction for the linkage target app candidate list creation process, the embedded app execution framework 1032 executes, in ACT 604, the linkage target app candidate list creation process, based on the linkage target app management table 1035. The linkage target app candidate list creation process will be described later.

Next, the embedded app execution framework 1032 instructs the display 1017 to display the linkage target app candidate list. Responding to this, the display 1017 displays the linkage target app candidate list in ACT 605. In addition, the touch panel 1016 waits for the user to select the linkage target app from the linkage target app candidate list displayed on the display 1017.

If the selection of the linkage target app by the user is performed, the embedded app execution framework 1032 acquires, in ACT 606, the information (app ID) of the linkage target app selected via the touch panel 1016.

Next, the embedded app execution framework 1032 instructs the scan app to execute scan. At this time, the embedded app execution framework 1032 delivers the app ID of the selected linkage target app to the scan app. The app ID is utilized for linkage setting in the scan app. Upon receiving the instruction for execution of scan, the scan app executes scan in ACT 607.

In ACT 608, the scan app generates a file of the scan image by executing the scan. The scan app saves the generated file of the scan image. Subsequently, the scan app issues a request for linkage with the linkage target app to the embedded app execution framework 1032. At this time, the scan app delivers to the embedded app execution framework 1032 the app ID of the linkage target app and the file path of the destination of saving of the file of the scan image.

Upon receiving the request for linkage with the linkage target app, the embedded app execution framework 1032 starts, in ACT 609, the linkage target app selected via the touch panel 1016, based on the app ID.

In addition, at the time of starting the linkage target app, the embedded app execution framework 1032 transmits, in ACT 610, the file of the scan image, which is the processing target data of the scan app, from the scan app to the linkage target app, based on the file path.

### (Linkage Target App Candidate List Creation Process)

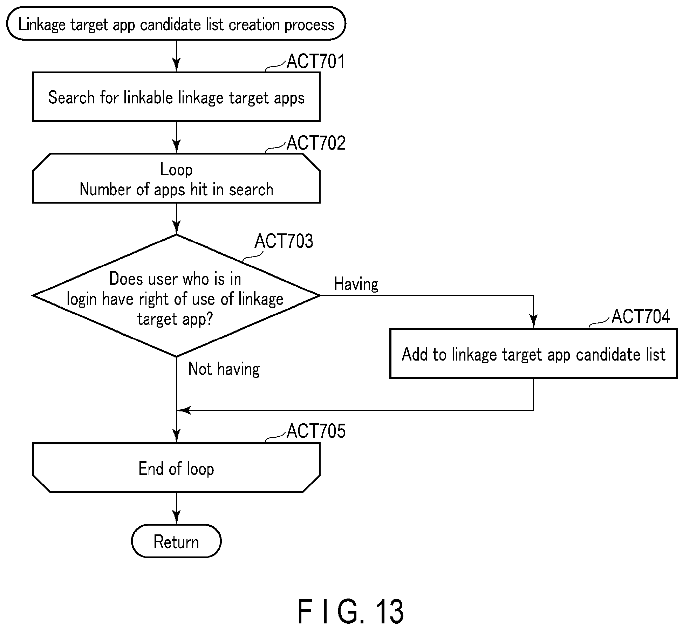

Next, referring to FIG. 13, a description is given of an example of the linkage target app candidate list creation process in the second app linkage process. FIG. 13 is a flowchart illustrating an example of the linkage target app candidate list creation process in the second file linkage process.

In ACT 701, the embedded app execution framework 1032 searches the linkage target app management table 1035 for linkage target apps that are linkable with the scan app. Specifically, based on the linkage target app management table 1035, the embedded app execution framework 1032 determines the permission/non-permission of linkage with the scan app in regard to each of the linkage target apps, and acquires a linkable linkage target app as a candidate of linkage target apps. The method of the search is similar to the method of the search in ACT 301 of the first linkage target app candidate list creation process, and the examples of the determination of the permission/non-permission of linkage and the acquisition of candidates of linkage target apps are as described above.

For example, in ACT 702 to ACT 705, the embedded app execution framework 1032 executes the following process on each of the linkage target apps (candidates of linkable linkage target apps) that have been hit in the search in ACT 701.

In ACT 703, referring to the user management table 1038, the embedded app execution framework 1032 determines whether the user who is in login has the right of use of the linkage target app, for example, based on the user ID acquired through the login authentication. If the user who is in login has the right of use of the linkage target app (ACT 703: having), the process advances to ACT 704. If the user who is in login does not have the right of use of the linkage target app (ACT 703: not having), the process advances to ACT 705.

If the user who is in login has the right of use of the linkage target app (ACT 703: having), the embedded app execution framework 1032 adds, in ACT 704, the linkage target apps (i.e., the candidates of the linkable linkage target apps) that have been hit in the search in ACT 701 to the linkage target app candidate list.

In ACT 702 to ACT 705, all linkage target apps (i.e., candidates of linkable linkage target apps) that have been hit in the search in ACT 701 are added to the linkage target app candidate list, so that the creation of the linkage target app candidate list is completed.

According to this linkage target app candidate list creation process, the subsequent processes of the start of the linkage target app and the transmission of the processing target data (scan image) from the linkage source app (scan app) to the linkage target app become processes in which the presence/absence of the right of use of the linkage target app of the user who is in login is reflected.

### (Advantageous Effects)

As has been described above, in the image forming apparatus 1001 according to the embodiment, the processor 1011 creates the candidate list of linkage target apps that are linkable with the linkage source app, based on the linkage target app management table 1035, provides an environment (linkable app selection screen) for selecting the linkage target app from the candidate list, starts the linkage target app selected from the candidate list, and delivers the processing target data from the linkage source app to the linkage target app at the time of staring the linkage target app. Thereby, there can be provided the image forming apparatus 1001 that starts the appropriate linkage target program without the need to perform trial and error.

In addition, according to the embodiment, the processor 1011 of the image forming apparatus 1001 is provided with the control program for executing the above-described operation. The control program may be transferred in a state in which the control program is stored in an electronic device, or may be transferred in a state in which the control program is not stored in an electronic device. In the case of the latter, the program may be transferred via a network, or may be transferred in a state in which the program is stored in a storage medium. The storage medium is a non-transitory tangible medium. The storage medium is a computer-readable medium. The storage medium may be in any form, if the storage medium is a medium that can store a program, such as a memory card, and that can be read by a computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus including various functions, comprising:
a storage device storing a linkage source app that executes one of the various functions, a linkage target app that links with the linkage source app, and linkage target app management information including information of permission/non-permission of linkage of the linkage target app with the linkage source app; and
a processor configured to execute the linkage source app and the linkage target app,
the processor being configured to:
create a candidate list of candidates of linkage target apps that are linkable with the linkage source app, based on the linkage target app management information;
provide an environment for selecting the linkage target app from the candidate list;
start the linkage target app selected from the candidate list; and
deliver processing target data from the linkage source app to the linkage target app at a time of starting the linkage target app.

2. The image forming apparatus of claim 1, wherein
the storage device stores license information of the linkage target app, and
the processor is configured to create the candidate list, based on the license information.

3. The image forming apparatus of claim 1, wherein
the storage device stores user management information including identification information of a user, and
the processor is configured to perform login authentication, based on the user management information.

4. The image forming apparatus of claim 3, wherein
the user management information includes right information relating to presence/absence of a right of use of the linkage target app for each of the users, and
the processor is configured to create the candidate list, based on the right information.

5. The image forming apparatus of claim 1, wherein
the storage device stores setting information of validity/invalidity of app linkage for each of the functions, and
the processor is configured to create the candidate list, based on the setting information.

6. The image forming apparatus of claim 1, wherein
through the environment, the processor is configured to:
display the candidate list; and
receive selection of the linkage target app selected from the candidate list.

7. The image forming apparatus of claim 1, wherein
in order to create the candidate list, the processor is configured to acquire a linkage target app linkable with the linkage target app, as a candidate of the linkable linkage target apps.

8. The image forming apparatus of claim 7, wherein
the linkage target app management information includes information of a receivable file format of the linkage target app, and
in order to create the candidate list, the processor is configured to acquire a linkage target app including the file format type of the processing target data as the receivable file format, as a candidate of the linkable linkage target apps.

9. The image forming apparatus of claim 8, wherein
at a time of installation of the linkage target app, the processor is configured to:
analyze a file linkage protocol definition data included in a package file of the linkage target app;
acquire information of the permission/non-permission of linkage with the linkage source app and the receivable file format; and
store the information into the linkage target app management information.

10. The image forming apparatus of claim 8, wherein
the storage device stores license information of the linkage target app, the information of the linkage target app including information of necessity/nonnecessity of the license and validity of the license,
for each candidate of the linkable linkage target apps, the processor is configured to:
determine whether the candidate requires the license, based on the information of necessity/nonnecessity of the license;
when the license requires the license, determine whether the license is valid, based on the information of validity of the license, in the case that the license is valid, acquire the candidate, as a secondary candidate of the linkable linkage target apps; and
when the license does not require the license, acquire the candidate, as a secondary candidate of the linkable linkage target apps, and
the processor is configured to create the candidate list, based on the secondary candidates.

11. The image forming apparatus of claim 8, wherein
the storage device stores setting information of validity/invalidity of app linkage that is set in regard to each function of the image forming apparatus,
for each candidate of the linkable linkage target apps, the processor is configured to:
determine whether the function setting corresponding to the candidate is valid, based on the setting information; and
when the function setting is valid, acquire the candidate, as a secondary candidate of |the linkable linkage target apps, and
the processor is configured to create the candidate list, based on the secondary candidates.

12. The image forming apparatus of claim 8, wherein
the storage device stores user management information including identification information of a user, and
the processor is configured to perform login authentication, based on the user management information.

13. The image forming apparatus of claim 8, wherein
the user management information includes right information relating to presence/absence of a right of use of the linkage target app in regard to each of users,
for each candidate of the linkable linkage target apps, the processor is configured to:
determine whether the user who is in login has the right of use of the linkage target app, based on the right information; and
when the user has the right, acquire the candidate, as a secondary candidate of the linkable linkage target apps, and
the processor is configured to create the candidate list, based on the secondary candidates.
